# DEMANDE DE BREVET EUROPEEN

(11) **EP 4 809 801 A1**
(43) Date de publication de la demande: **23.09.2026**
(21) Numéro de dépôt: 26166281.1
(22) Date de dépôt: 20.03.2026
(51) Int. Cl.: A01C 7/10

(54) **BANC DE TEST D'UNE MACHINE AGRICOLE, TELLE UN SEMOIR**

(30) Priorité: 20.03.2025 FR 2502847; 20.03.2025 FR 2502845; 20.03.2025 FR 2502846
(71) Demandeur: Burel Production, 35220 Chateaubourg (FR); Kuhn SAS, 67700 Saverne (FR); INSTITUT NATIONAL DE RECHERCHE POUR L'AGRICULTURE, L'ALIMENTATION ET L'ENVIRONNEMENT, 75007 Paris (FR)
(72) Inventeur: LEVEILLE, Lionel, 35500 VITRE (FR); HAYOT, Mathieu, 35130 LA GUERCHE DE BRETAGNE (FR); PIRON, Emmanuel, 03300 CREUZIER LE VIEUX (FR); MICLET, Denis, 03150 VARENNES SUR ALLIER (FR); POTIER, Philippe, 67290 ZITTERSHEIM (FR)
(74) Mandataire: Vidon Brevets & Stratégie

(57) **Abrégé**

L'invention concerne un banc de test ou d'essais (1) d'une machine agricole (2) de distribution de particules apte à mettre en œuvre une pluralité de modules (5) de mesure d'un flux de particules délivrées par au moins un organe de sortie (21) de la machine agricole (2), ledit banc de test (1) comprenant des premiers moyens de réglage de l'assiette de la machine agricole (2) à tester ainsi que des modules de mesure (5), et des seconds moyens de réglage de la position relative des modules de mesure (5) par rapport à la machine agricole (2) à tester.

## Description

### Domaine technique

La présente invention se rapporte au domaine technique général du machinisme agricole.

Plus précisément, l'invention concerne un banc de test pour machine agricole et un procédé de mise en œuvre d'un tel banc de test.

L'invention s'applique ainsi notamment, mais non exclusivement, aux bancs de test pour réaliser des contrôles de qualité de semoirs destinés à être montés ou traînés à l'arrière d'un tracteur, permettant de délivrer des particules, sur une pluralité de rangs d'une parcelle, par exemple d'une exploitation agricole.

### Art antérieur

Les fabricants de machines agricoles possèdent des dispositifs pour tester différents paramètres des machines, telles que des semoirs, avant la mise en service de la machine sur le terrain de sorte que le fabricant puisse contrôler les performances de fonctionnement voir établir un certificat de conformité de production.

Un semoir comprend généralement une ou plusieurs trémies de stockage de particules alimentant une pluralité d'organes de sortie, appelés éléments semeurs répartis de manière régulière sur le châssis du semoir transversalement à l'axe d'avancement du semoir lorsqu'il est attelé à un tracteur. Les particules issues de la trémie s'écoulent généralement à travers des lignes de distribution vers chaque élément semeur dans un flux sensiblement continu. Chaque élément semeur définit un rang de semis ou rang d'ensemencement lequel est sensiblement confondu avec le plan vertical médian de l'élément semeur correspondant et la distance entre deux rangs de semis voisins définit l'écartement. Ainsi, le semoir permet de délivrer des particules sur une pluralité de rangs.

Dans le cadre de l'agriculture de précision, il est souhaitable que la distribution des graines pendant les semis, c'est-à-dire la quantité désirée de produit par unité de surface, soit la plus régulière et la plus précise possible. Il est donc important que les semoirs utilisés par les exploitants évitent au maximum les irrégularités telles que les manques et les doubles ainsi que les différences entre rangs. A titre d'exemple, la densité conseillée pour semer du maïs est comprise entre 7 et 12 graines au m2, celle pour semer du blé est comprise entre 200 et 500 grains au m2.

Il est ainsi nécessaire de tester les semoirs lors des phases de recherche et développement ou en sortie de production, et notamment de vérifier que le débit préconisé du semoir, et donc le débit de chaque élément semeur, est respecté. Le fabricant peut être amené à contrôler les performances de fonctionnement, par exemple en lien avec des normes environnementales, et éventuellement établir un certificat de conformité de production. Les normes environnementales EN 13739 pour les épandeurs ou ISO 7256 pour les semoirs définissent des points de contrôle de performance des machines agricoles dans le but d'assurer une bonne maitrise de l'impact environnemental des opérations d'épandage et de semis.

Il est connu du document EP 1 610 112 un banc d'essai pour la mesure de la répartition d'épandage de distributeurs de particules à épandre, du type présentant une distribution centrifuge des particules par un disque. Les données de pesée ainsi que les valeurs angulaires sont enregistrées en continu au cours du test, et une fois le test terminé, les données brutes de la répartition au sol peuvent être traitées de façon spatiale afin d'établir la nappe de répartition au sol. Le banc de test est équipé d'un dispositif de support de l'épandeur et d'une rangée de collecteurs. Le dispositif de support permet de régler la position de l'épandeur par rapport aux collecteurs mais ne permet pas que les collecteurs puissent suivre l'assiette de la machine.

Ce banc d'essai ne permet donc pas de reproduire toutes les conditions d'utilisation des semoirs.

Il existe donc un besoin d'une solution simple, fiable, facile à utiliser, et d'un coût raisonnable pour la détermination à chaque instant des valeurs de quantités de particules distribuées par chaque élément semeur d'un semoir, ou plus généralement d'une machine disposant d'organes de sortie de particules, afin de qualifier sa performance de répartition sur chacun des rangs (on parle de répartition longitudinale) et entre les rangs eux-mêmes (on parle de répartition transversale).

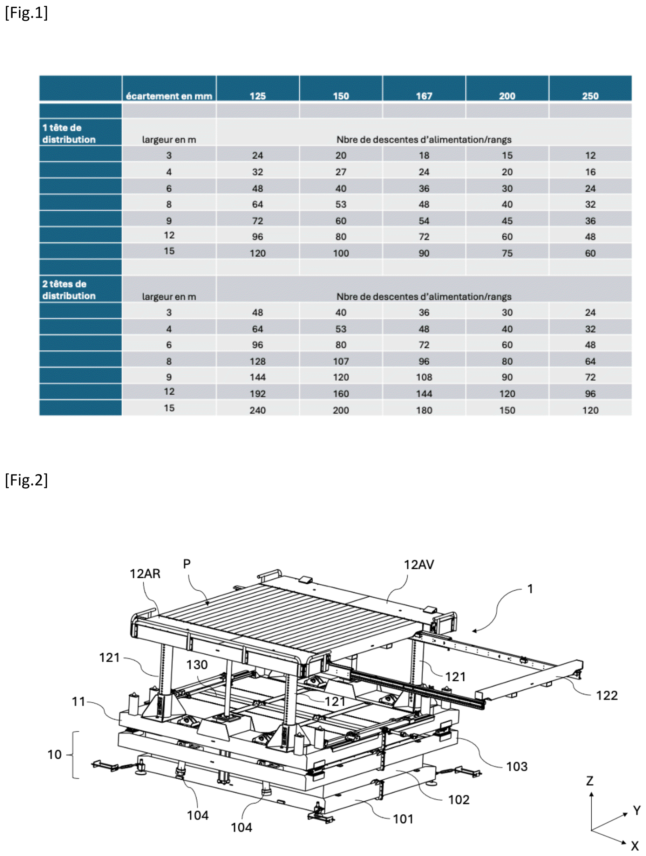

Le tableau de la figure 1 liste le nombre de rangs que les semoirs du marché à une ou deux têtes de distribution peuvent présenter en fonction de la largeur de travail (allant de 3m à 15m) et de l'écartement entre éléments semeurs/rangs (allant de 125 mm à 250 mm) souhaités.

Par conséquent, il existe également un besoin d'une solution qui puisse s'adapter à un maximum de semoirs présents sur le marché et à la variabilité des écartements entre leurs éléments semeurs.

Il existe en outre un besoin d'une solution qui puisse supporter l'hétérogénéité des particules utilisées dans le domaine du semi et qui n'interfère pas avec les éléments de la machine.

Il existe par ailleurs un besoin d'une solution qui permette de réduire le temps de réglage ou d'étalonnage des machines agricoles, et de diminuer la pénibilité de ces contrôles pour les opérateurs.

### Exposé de l'invention

L'invention répond à ces besoins en proposant un banc de test ou d'essais d'une machine agricole de distribution de particules apte à mettre en œuvre une pluralité de modules de mesure d'un flux de particules délivrées par au moins un organe de sortie de la machine agricole, ledit banc de test comprenant des premiers moyens de réglage de l'assiette de la machine agricole ainsi que des modules de mesure, et des seconds moyens de réglage de la position relative des modules de mesure par rapport à la machine agricole.

L'invention propose ainsi un banc de test ou d'essais d'une machine agricole de distribution de particules, telle un semoir, permettant de placer ce semoir dans différentes positions et de mesurer la précision du dosage des semences (distribution longitudinale) et la performance de la distribution latérale dans ces différentes positions. Le banc de test a pour but de tester et d'effectuer des vérifications du fonctionnement d'un semoir assemblé en sortie d'usine notamment, prêt à utiliser pour un opérateur pour effectuer les semis dans les champs.

Les essais peuvent être effectués avec le semoir en position horizontale ou peuvent simuler des semis sur des surfaces en dévers, avec des essais sur des dévers à gauche et à droite, ainsi qu'avec une inclinaison du semoir vers l'avant ou l'arrière, avec ou sans dévers. Il est également possible de combiner un dévers et une inclinaison avant/arrière.

Lors de ces tests, le banc d'essai permet de déterminer la précision de dosage du semoir dans toutes les variations du banc d'essai, notamment la précision de la distribution longitudinale des semences par les différents organes de sortie du semoir dans le sens d'avancement et la distribution transversale des différents organes de sortie dans la direction perpendiculaire au sens d'avancement.

Autrement dit, le banc permet de caractériser les répartitions transversale, dans la largeur de travail de la machine, et longitudinale, dans le sens d'avancement de la machine, des graines à la sortie des éléments semeurs des semoirs et donc de vérifier le bon fonctionnement de la machine lors de la phase de recherche et développement ou en sortie de production.

Pour effectuer ces mesures, le banc de test met en œuvre des modules de mesure d'un flux de particules destinés chacun à être placés sous un ou plusieurs organes de sortie d'une machine agricole à tester. Ces modules permettent de réceptionner/collecter toutes les particules distribuées par ce ou ces organes de sortie sans entrer en contact avec ces derniers, et de mesurer en continu ou en quasi-continu une quantité de particules.

Le banc de test est conçu de sorte à pouvoir positionner avec précision ces modules par rapport à la machine à tester, telle un semoir, en plus de pouvoir orienter la machine et synchroniser les mesures issues de chacun des modules pour déterminer la performance de la machine.

Il est conçu pour pouvoir s'adapter à un maximum de semoirs présents sur le marché et qualifier la performance de répartition longitudinale et transversale du semoir sur chaque rang et entre les rangs respectivement.

Dans un mode de réalisation particulier, chaque module de mesure mis en œuvre sur le banc permet de peser les particules délivrées par un ou plusieurs organes de sortie d'une machine agricole. Le module est configuré pour délivrer une mesure de poids par exemple pour la détermination du débit de particules (quantité de particules par unité de temps) délivré par au moins un élément semeur d'une machine agricole de type semoir. Une telle mise en œuvre permet de limiter le nombre de manipulations à effectuer pour un utilisateur, notamment en lui évitant de devoir déplacer le bac de collecte pour aller le peser.

Dans un mode de réalisation particulier, le banc est équipé d'un système de vidange, collecte et évacuation des graines. L'intégration de cette fonction permet d'une part de gagner en productivité des essais et d'autre part que les opérateurs travaillent dans de bonnes conditions d'hygiène et sécurité.

Le module qui est portatif n'est pas intrusif vis-à-vis de la machine agricole (un semoir par exemple) et de ses organes de sortie de particules (les éléments semeurs dans ce cas de figure), et il n'interfère donc pas avec la performance de ces derniers que l'on cherche à mesurer.

Selon un aspect particulier de l'invention, lesdits premiers moyens de réglage sont aptes à commander le dévers et/ou la pente de la machine agricole ainsi que des modules de mesure.

Selon un autre aspect particulier de l'invention, lesdits seconds moyens de réglage sont aptes à déplacer les modules de mesure par rapport à la machine agricole suivant au moins l'axe d'avancement de la machine agricole en fonctionnement normal et l'axe transversal audit axe d'avancement.

Selon encore un aspect particulier de l'invention, le banc de test comprend des moyens de contrôle des premiers moyens de réglage et des seconds moyens de réglage, lesdits moyens de contrôle étant aptes à commander le déplacement dynamique de la machine agricole et des modules de mesure entre plusieurs positions de test.

Selon une mise en œuvre particulière, le banc de test comprend un châssis principal, dit premier châssis, portant un deuxième châssis de support des modules de mesure et de la machine agricole, ledit deuxième châssis étant inclinable autour de l'axe d'avancement de la machine agricole de sorte à régler le dévers de la machine agricole ainsi que des modules de mesure.

Selon un aspect particulier de l'invention, le deuxième châssis de support porte un dispositif d'appui de la machine agricole et une structure porteuse des modules de mesure, ledit deuxième châssis comprenant des moyens de pivotement de la structure porteuse autour de l'axe transversal à l'axe d'avancement de la machine agricole de sorte à positionner les modules de mesure à plat ou avec une inclinaison (mise en pente) vers l'avant ou vers l'arrière.

Selon un autre aspect particulier de l'invention, le banc de test comprend des moyens d'élévation du deuxième châssis.

Selon un aspect particulier de l'invention, les modules de mesure sont répartis en une ou plusieurs rangées parallèles entre elles sur la structure porteuse et s'étendent dans la direction transversale à l'axe d'avancement de la machine agricole.

De façon avantageuse, la structure porteuse comprend des premiers moyens de réglage de l'espacement entre deux rangées consécutives de modules de mesure.

Avantageusement, la structure porteuse comprend des seconds moyens de réglage de l'espacement entre les modules de mesure d'une même rangée.

Selon un aspect particulier de l'invention, le dispositif d'appui de la machine agricole comprend au moins un plateau d'appui et le banc comprend des moyens de réglage en hauteur dudit au moins un plateau d'appui par rapport au deuxième châssis pour positionner la machine agricole à plat ou avec une inclinaison (mise en pente) vers l'avant ou vers l'arrière.

Selon un autre aspect particulier de l'invention, le dispositif d'appui comprend deux plateaux d'appui de la machine agricole apte à être reliées entre eux par une ou plusieurs barres d'appui amovibles de sorte à former une plateforme sur laquelle est apte à reposer en partie la machine agricole.

Selon encore un autre aspect particulier de l'invention, le banc de test comprend un tablier réglable de support et de positionnement d'une machine agricole du type portée au-dessus des modules de mesure, ledit tablier étant destiné à être porté par le dispositif d'appui.

Selon un aspect particulier de l'invention, le banc de test comprend des moyens de récupération et évacuation des particules provenant d'au moins un module de mesure lorsque ledit module de mesure est basculé d'une position de mesure vers une position de vidange de ce dernier.

### Liste des figures

D'autres caractéristiques et avantages de l'invention apparaîtront à la lecture de la description suivante de modes de réalisation, donnés à titre de simples exemples illustratifs et non limitatifs, et des dessins annexés, parmi lesquels :
- [Fig.1] : la figure 1 est un tableau listant liste le nombre de rangs que les semoirs du marché à une ou deux têtes de distribution peuvent présenter en fonction de la largeur de travail et de l'écartement entre éléments semeurs/rangs souhaités ;
- [Fig.2] : la figure 2 est une vue en perspective partielle d'un banc de test selon l'invention ;
- [Fig.3] : la figure 3 est une vue de côté d'un banc de test selon l'invention ;
- [Fig.4] : la figure 4 est une vue en perspective d'une structure de support de modules de mesure mise en œuvre dans banc de test selon l'invention ;
- [Fig.5] : la figure 5 est une vue de côté de la structure de la figure 4 ;
- [Fig.6] : la figure 6 est une vue schématique montrant la mise en place d'un semoir porté sur un banc de test selon l'invention ;
- [Fig.7A], [Fig.7B], [Fig.7C] : les figures 7A à 7C sont des vues schématiques montrant différentes mises en place d'un semoir attelé sur un banc de test selon l'invention ;
- [Fig.8] : la figure 8 est une vue schématique en perspective d'un module de mesure pouvant être mis en œuvre dans un banc de test selon l'invention.

### Description détaillée de l'invention

On discute essentiellement, par la suite, d'un banc de test lorsqu'il est mis en œuvre pour déterminer la performance de semoirs en lignes ou monograines, aptes à délivrer des matériaux en grains, tels que des graines de semence ou des particules d'engrais ou de protection des semis (anti-limaces par exemple) ou encore des graines de produits phytosanitaires.

De tels semoirs peuvent être portés ou tractés.

Les mêmes explications et commentaires s'appliquent également pour d'autres machines agricoles de distribution de particules.

On entend ici par « particules » des matériaux en grains, tels que des graines de semence ou des particules d'engrais ou de protection des semis (anti-limaces par exemple) ou des graines de produits phytosanitaires.

Le banc de test selon l'invention permet d'orienter le semoir à tester et les modules de mesure dans plusieurs directions en faisant varier leur assiette, c'est-à-dire leur tangage et roulis. Il permet ainsi d'orienter le semoir et les modules sur les côtés et/ou en avant ou en arrière (essais en pente simulée) pour la mesure de performance en se rapprochant ainsi au maximum des conditions réelles d'utilisation.

La combinaison de mise en pente et dévers est possible.

Dans ce contexte, les termes tels que "avant", "arrière" et "transversal" sont bien entendu définis en relation avec la direction d'avancement du semoir attelé au tracteur en fonctionnement normal.

L'axe Y dans le repère orthonormé des figures correspond à l'axe d'avancement en fonctionnement normal de la machine agricole à tester et l'axe X correspond à l'axe transversal à cet axe d'avancement.

Le banc de test selon l'invention est adapté en particulier, mais non exclusivement, à des semoirs portés et trainés.

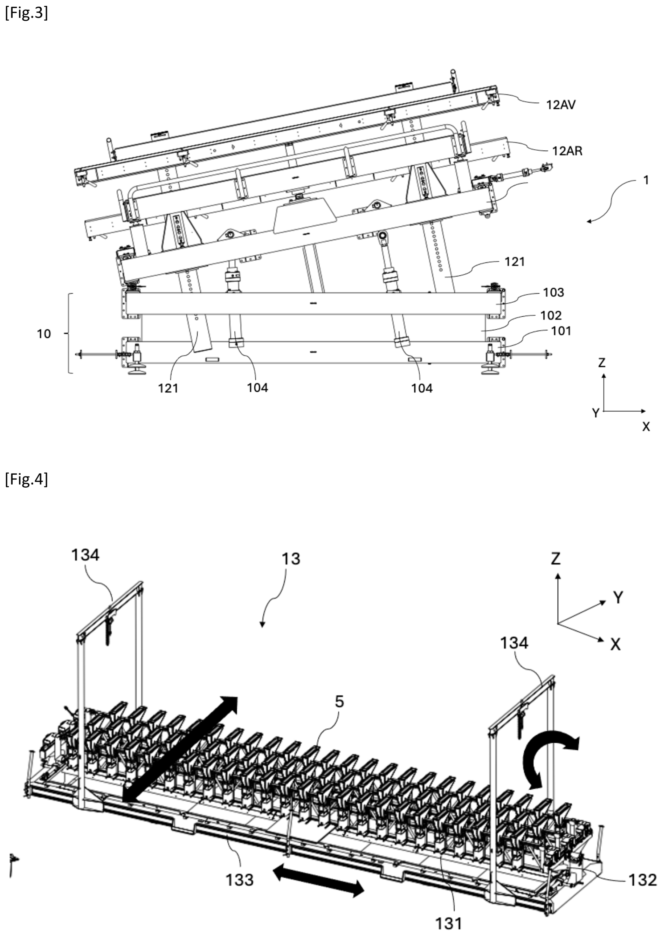

De bas en haut pour l'exemple illustré sur les figures 2 et 3, le banc de test 1 comprend un premier châssis 10, dit châssis principal, comprenant un socle 101 destiné à reposer sur le sol par exemple. Ce socle 101 porte une table élévatrice 102 (une table à ciseaux dans cet exemple) présentant un cadre supérieur 103 sur lequel repose un deuxième châssis 11 inclinable, appelé également châssis de dévers. Le deuxième châssis 11 est inclinable autour de l'axe d'avancement Y ce qui permet de positionner la machine agricole à tester et les modules de mesure avec un dévers orienté vers la droite ou vers la gauche.

Le banc de test 1 comprend un capteur de positon selon l'axe Z du cadre supérieur 103 et donc du deuxième châssis 11 par rapport au socle 101 lorsque les moyens d'élévation (la table élévatrice 102 en l'occurrence) sont mis en mouvement pour élever ou abaisser le deuxième châssis 11 selon l'axe Z.

Le deuxième châssis 11 inclinable est ici relié au socle 101 par quatre vérins 104 hydrauliques. Il repose sur le cadre supérieur 103 par quatre points d'appui situés aux quatre coins du cadre supérieur. Le deuxième châssis 11 peut pivoter d'un côté ou de l'autre autour de l'axe d'avancement Y autour de deux points d'appui formant pivot. Selon le sens du dévers choisi, les deux vérins 104 hydrauliques les plus éloignés du pivot sont actifs et les deux vérins hydrauliques les plus proches du pivot sont passifs comme illustré sur la figure 3.

Le deuxième châssis 11 porte un plateau élévateur avant 12AV et un plateau élévateur arrière 12AR qui peuvent être chacun déplacés verticalement selon l'axe Z par deux colonnes hydrauliques 121. Chaque plateau élévateur 12AV, 12AR est destinée à supporter l'essieu d'une machine agricole à tester, telle un semoir, selon que les sorties de particules du semoir à tester sont situées avant les roues ou après. Ces plateaux élévateurs 12AV, 12AR permettent l'inclinaison vers l'avant ou l'arrière du semoir (le semoir peut ainsi pivoter autour de l'axe Y transversal) de sorte à reproduire une pente montante ou une pente descendante.

Le deuxième châssis 11 porte en outre la structure porteuse 13 des modules de mesure 5 qui sera décrite en détails par la suite et notamment le mécanisme de guidage et de déplacement en translation, selon les axes X et Y, des modules de mesure. Ce mécanisme de guidage et de déplacement comprend notamment des glissières 130 fixées sur le deuxième châssis 11.

Il est possible de monter entre les plateaux élévateurs avant 12AV et arrière 12AR une plateforme P amovible constituée de plusieurs tubes 122 juxtaposés, la plateforme P étant capable de supporter le poids sur l'essieu du semoir à tester.

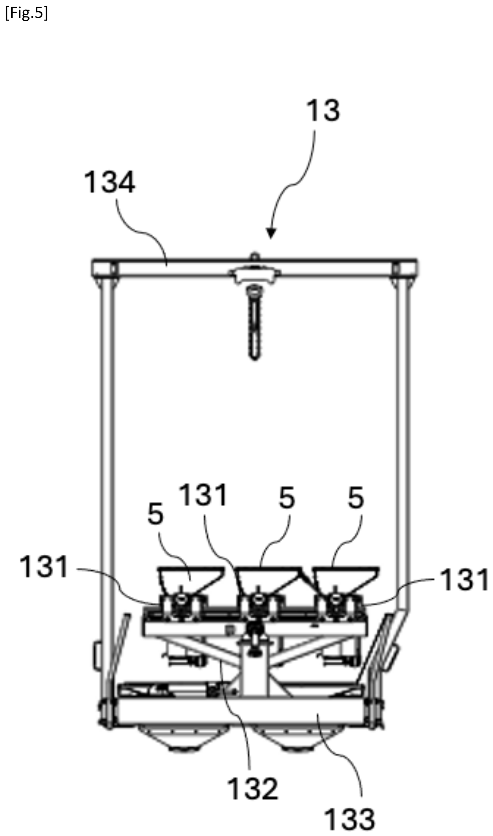

Un exemple de structure porteuse 13 des modules de mesure (qui sont des modules de pesée par exemple) est illustré sur les figures 4 et 5.

Dans l'exemple illustré, la structure porteuse 13 comprend un berceau 133 de forme rectangulaire sur lequel sont montés des balanciers et des poutres décrits ci-après. La position des modules de mesure par rapport à la machine à tester peut ainsi être aisément ajustée.

Ainsi, le berceau 133 est mobile en translation sur les glissières 130 du deuxième châssis 11 selon les axes X et Y par le biais de vérins hydraulique. Le débattement du berceau 133 selon l'axe X est de l'ordre de ± 100mm dans cet exemple et le débattement du berceau 133 selon l'axe Y est compris entre 0 et 1050mm dans cet exemple. Ceci permet de positionner très précisément chaque module de mesure 5 en dessous d'un ou plusieurs éléments semeurs de la machine agricole à tester.

Trois poutres 131 qui sont aptes à porter chacune jusqu'à 45 modules de collecte et de mesure 5 et qui s'étendent parallèlement les unes aux autres sont montées sur le berceau. Les extrémités opposées de ces poutres 131 reposent sur deux balanciers 132 solidaires en rotation du berceau 133 par le biais de deux pivots. Les poutres 131 sont aptes à se déplacer les unes par rapport aux autres par translation.

Les deux balanciers 132 portant donc les poutres et donc l'ensemble des modules de collecte et de mesure 5 peuvent pivoter vers l'avant ou l'arrière (par le biais de vérins) autour de l'axe X transversal à l'axe de déplacement Y de la machine agricole de sorte à reproduire une pente montante ou une pente descendante. Le débattement angulaire est dans cet exemple compris entre 8 et 20°.

La structure porteuse 13 comprend par ailleurs deux portiques 134, une plateforme d'accès périphérique (non illustrée) et un ou plusieurs convoyeurs à bande permettant de collecter et d'évacuer les particules lors de la vidange des modules de mesure 5.

Les modules de mesure 5 peuvent être répartis sur une seule poutre 131 (et donc un rang), sur deux poutres 131 (et donc deux rangs) ou bien sur les trois poutres 131 (soit trois rangs) comme dans l'exemple des figures 4 et 5.

La variabilité des éléments semeurs ou organes de sortie des semoirs du marché nécessite en effet de pouvoir répartir les réceptacles des modules de mesure 5 sur la structure porteuse 13 des modules de mesure 5 selon les axes X et Y.

Sur la structure porteuse 13, l'entraxe entre les rangs de modules de mesure 5 ou entre les modules de mesure 5 d'un même rang est ajustable par le biais de moyens de réglage et de repères visuels dans les limites ci-après données à titre d'exemple :
- de 40 à 50 modules sur un même rang maximum, de préférence 45 modules ;
- 1, 2 ou 3 rangs dans la limite de 60 à 80 modules, de préférence 72 modules ;
- Entraxe minimum entre deux lignes de semis (c'est-à-dire entre deux modules disposés sur des rangs distincts) compris entre 100 et 150 mm, de préférence égal à 125mm;
- Entraxe minimum entre deux modules sur le même rang : compris entre 150 et 250 mm, de préférence égal à 200mm ;
- Entraxe minimum entre deux rangs : compris entre 300 et 340 mm, de préférence égal à 320mm ;
- Entraxe maximum entre deux rangs : compris entre 500 et 600 mm, de préférence égal à 560mm ;
- Entraxe minimum entre deux rangs successifs d'éléments semeurs : compris entre 150 et 200 mm, de préférence égal à 180 mm.

La structure porteuse 13 peut ainsi être associée à des semoirs dont les écartements entre les rangs sont différents, ainsi qu'à des semoirs de différents nombres de rangs (36 ou 48 rangs par exemple).

Par ailleurs, les modules de mesure 5 sont interchangeables ou combinables sur la structure porteuse 13, un rang de modules pouvant être destiné à collecter de la poudre, un autre rang de modules pouvant être destiné à collecter du liquide et le dernier rang de modules pouvant être destiné à collecter des graines.

Le banc de test 1 est donc configuré pour positionner la machine agricole et les modules de mesure 5 sur la structure, le banc de test comprenant :
- des premiers moyens de réglage de l'assiette (dévers droite ou gauche et/ou pente avant ou arrière) de la machine agricole ainsi que des modules de mesure 5, ces premiers moyens de réglage de l'assiette comprenant le deuxième châssis 11 inclinable, les plateaux élévateurs avant 12AV et arrière 12AR et les balanciers 132 de la structure porteuse 13 des modules de mesure , et
- des seconds moyens de réglage de la position relative en X et en Y des modules de mesure 5 par rapport à la machine agricole, ces seconds moyens de réglage comprenant les glissières 130 de guidage et de déplacement en translation selon les axes X et Y de la structure porteuse 13.

Le fonctionnement du banc de test 1 qui vient d'être décrit va maintenant être brièvement expliqué lorsqu'il est utilisé pour tester un semoir dit porté par le tracteur.

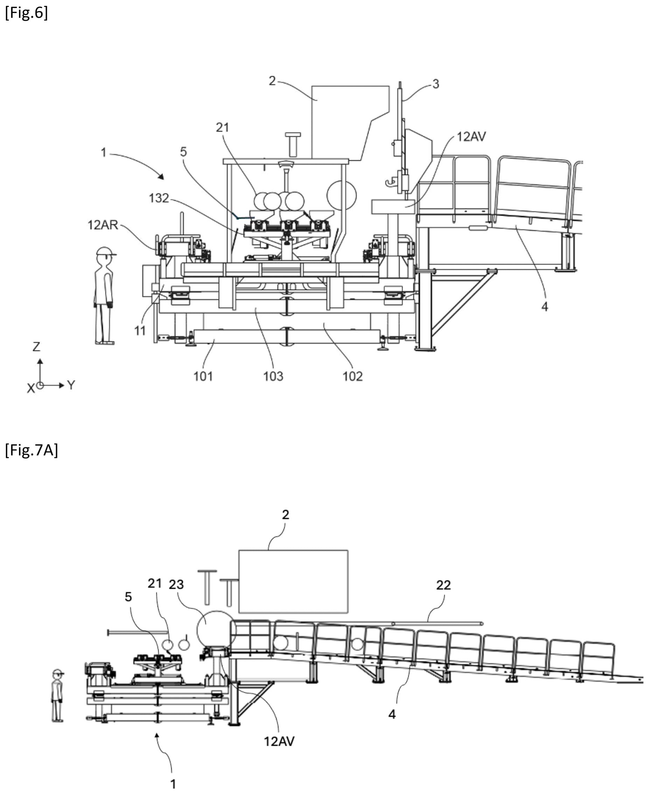

La figure 6 illustre la mise en place sur le banc de test 1 d'un semoir 2 du type porté. La pente et le dévers du semoir 2 et des modules de mesure 5 sont nuls dans l'exemple illustré.

Le dispositif de support du semoir 2 comprend dans l'exemple illustré un tablier 3 qui est équipé de béquilles latérales escamotables reposant sur le plateau élévateur avant 12AV. Le tablier 3 présente plusieurs points d'accroche du semoir 2 (un attelage trois points dans cet exemple) qui peut ainsi être positionné au-dessus du banc de mesure. Les éléments semeurs 21 du semoir 2 sont ainsi disposés au-dessus de modules de mesure 5.

Comme décrit précédemment, il est possible de positionner très précisément les modules de mesure 5 par rapport à la machine agricole grâce aux seconds moyens de réglage, c'est-à-dire de placer chaque module de mesure en-dessous d'un ou de plusieurs éléments semeurs de la machine.

Le tablier 3 peut être incliné vers l'avant, l'arrière, à droite ou à gauche, de sorte à régler l'assiette du semoir 2. A titre d'exemple, le tablier 3 permet d'incliner le semoir pour simuler un dévers de ±20% (±11,3°). Il est également possible à l'aide du tablier 3 d'ajuster la position latérale (+/- 150 mm selon l'axe X) du semoir 2. Une rampe d'accès 4 permet le transport et l'accès au tablier 3 et au semoir 2.

Le fonctionnement du banc de test 1 va également être brièvement expliqué lorsqu'il est utilisé pour tester un semoir dit trainé comprenant un timon destiné à être relié à un tracteur.

Les figures 7A à 7C illustrent trois positions de test du semoir trainé.

Sur la figure 7A, la pente et le dévers du semoir 2 et des modules de mesure 5 sont nuls.

Le semoir 2 est positionné au-dessus du banc de mesure via la rampe d'accès 4. Les roues 23 du semoir 2 reposent sur le plateau élévateur avant 12AV. Le timon 22 du semoir 2 peut être déplacé en hauteur pour simuler une pente positive ou négative. Le timon du semoir peut être déplacé latéralement (selon l'axe X) de ± 150 mm pour ajuster sa position au-dessus des modules de mesure 5 des particules s'écoulant des éléments semeurs 21 du semoir 2.

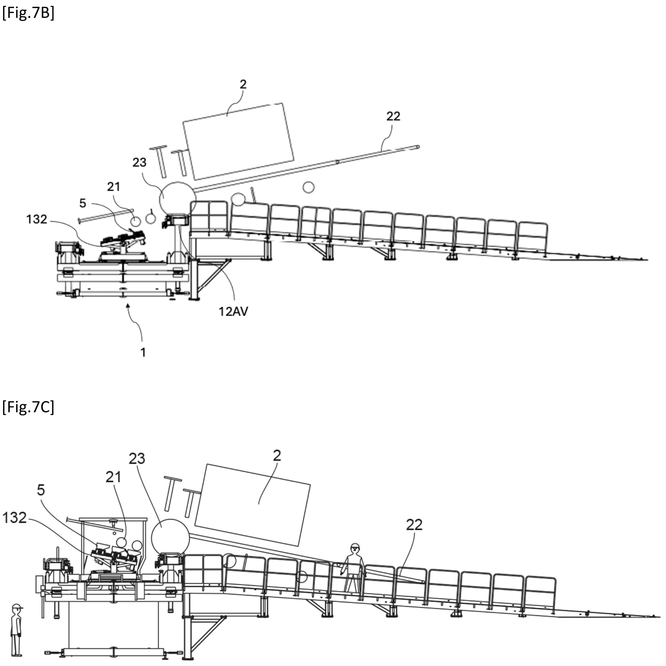

Sur la figure 7B, la pente du semoir 2 et des modules de mesure 5 est égal à +20%, le dévers étant nul. Les deux balanciers 132 pivotants permettent cette inclinaison des modules de mesure 5.

Sur la figure 7C, la pente du semoir 2 et des modules de mesure 5 est égal à -20%, le dévers étant nul.

Bien que ceci ne soit pas illustré, le dévers des modules de mesure 5 et du semoir 2 (qu'il soit porté ou trainé) peut être réglé selon l'inclinaison du deuxième châssis inclinable 11.

Lors des tests du semoir 2 sur le banc de test 1, le semoir est en position de travail et configuré pour distribuer des particules via ses éléments semeurs 21 au-dessus des modules de mesure 5 du banc de test 1.

Ces modules de mesure 5 ont été préalablement réglés pour être positionnés chacun en regard d'un élément semeur 21.

Les modules de mesure 5 collectent et pèsent les quantités de particules distribuées transversalement. Les données de mesure issues des modules de mesure 5 sont transférées vers des cartes d'acquisition reliées à une unité centrale de traitement associée à des moyens de mémorisation. Ces moyens de traitement sont aptes à calculer et éditer une courbe caractéristique de répartition transversale de l'épandage, par exemple.

Dans un mode de réalisation, le banc comprend des moyens de contrôle du cycle d'essais permettant de contrôler l'orientation de l'ensemble machine agricole/modules de mesure. Un logiciel de contrôle/commande chargé dans l'unité centrale de traitement récupère la liste des tests à exécuter dans un langage dédié. Le logiciel pilote et synchronise alors tout ou partie des composants du banc de test selon une séquence de test prédéfinie. Le logiciel récupère alors les données de mesure issues des modules de mesure 5 et peut effectuer un traitement de ces données pour délivrer une indication visuelle de la performance du semoir testé.

Les moyens de contrôle sont aptes à déplacer de façon dynamique la machine agricole et les modules de mesure entre une première position à plat, une deuxième position avec une inclinaison vers l'avant ou vers l'arrière sans dévers, une troisième position avec un dévers sans inclinaison vers l'avant ou l'arrière, et une quatrième position avec une inclinaison vers l'avant ou vers l'arrière combinée à un dévers.

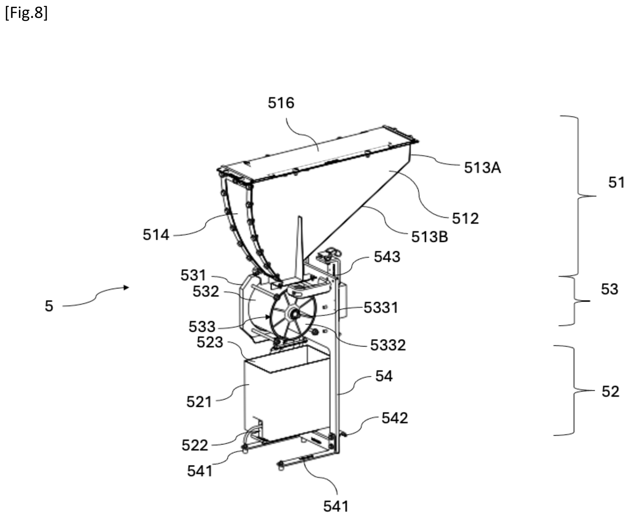

On présente en relation avec la figure 8 un exemple de module de mesure 5 d'un flux de particules qui peut être mis en œuvre dans un banc de test conforme à l'invention.

Un tel module de mesure 5 est par exemple destiné à être mis en œuvre avec d'autres modules identiques pour la détermination à chaque instant des valeurs de quantités de particules distribuées par chaque élément semeur d'un semoir, étant entendu que les particules s'écoulent généralement à travers les lignes de distribution vers chaque élément semeur dans un flux sensiblement continu. Le module de mesure se positionne toujours à la sortie ou l'extrémité de l'élément semeur, c'est-à-dire au niveau du soc.

Le module de mesure 5 comprend successivement des moyens de collecte 51 de particules en provenance d'un élément semeur d'un semoir (illustré schématiquement par un rectangle) qui est en position de semis et des moyens de mesure 52 d'une quantité de particules en provenance des moyens de collecte 51. L'ensemble est monté sur un châssis 54 en forme de « L » présentant des moyens d'accrochage (des crochets 542 et grenouillères 543 dans l'exemple illustré) du module de mesure 5 sur un banc de test 1 tel que décrit précédemment qui permettent une installation et un réglage en position rapide sur ce dernier et un démontage aisé.

Sur le banc de test, un élément semeur est situé en regard des moyens de collecte 51 d'un module de mesure 5. L'élément semeur peut être situé légèrement au-dessus des moyens de collecte 51 d'un module de mesure 5 ou bien être situé en partie au moins au sein de l'espace intérieur des moyens de collecte 51 de sorte à minimiser les risques de pertes de graines entre l'élément semeur et les moyens de collecte 51.

Le module de mesure 5 comprend en outre des moyens de transfert 53 des particules en provenance des moyens de collecte 51 vers les moyens de mesure 52, qui sont situés sous les moyens de collecte 51 et qui sont configurés pour ralentir les particules en provenance des moyens de collecte 51 et les délivrer de façon contrôlée et cadencée dans les moyens de mesure 52.

Dans l'exemple illustré, les moyens de collecte 51 comprennent un réceptacle de collecte 510 des particules comprenant deux parois longitudinales 512 opposées et reliées entre elles par une paroi latérale 514 et une paroi de fond 513 disposées en regard.

Le réceptacle de collecte 510 comprend également une ouverture d'entrée 511 des particules présentant une première section apte à collecter des particules en provenance de l'élément semeur correspondant de la machine agricole et une ouverture de sortie présentant une deuxième section plus petite que la première section, l'ouverture de sortie étant apte à délivrer les particules collectées vers les moyens de transfert 53 des particules.

Le module de mesure est disposé de sorte que la longueur de l'ouverture d'entrée 511 correspond à l'axe d'avancement Y de la machine agricole et la largeur de l'ouverture d'entrée 516 correspond à l'axe transversal X à cet axe d'avancement Y.

L'ouverture d'entrée 511 du réceptacle de collecte 510 est ici de section rectangulaire et permet d'adapter le module à différents types d'éléments semeurs. Une grande ouverture en haut du réceptacle de collecte 510 permet de s'adapter à un maximum d'organes de sortie, tels des éléments semeurs, présents sur le marché et au flux de particules sans modifier le réglage machine préconisé par le constructeur, et permet de recevoir plusieurs organes de sortie de particules identiques ou différentes. La grande ouverture permet aussi de récolter l'ensemble des graines qui arrivent de façon turbulente et désordonnée à la façon d'un entonnoir qu'on veut assez large en entrée pour tout collecter.

Le réceptacle de collecte 510 présente ici une forme générale d'entonnoir, dont la section se réduit progressivement de l'ouverture d'entrée 511 des particules à l'ouverture de sortie des particules.

Les parois du réceptacle de collecte 510 sont configurées pour canaliser ou rassembler le flux de particules depuis l'ouverture d'entrée 511 vers l'ouverture de sortie communiquant avec les moyens de transfert 53 des particules.

Les moyens de mesure 52 d'une quantité de particules provenant des moyens de collecte 51 appartiennent au groupe comprenant :
- des moyens de pesage des particules, tels un capteur de pesage dynamique ;
- des moyens de comptage des particules, tels un capteur optique,
- des moyens de mesure d'un volume d'un ensemble de particules, tels un débitmètre avec roue à aubes.

Dans l'exemple illustré, les moyens de mesure 52 d'une quantité de particules comprennent un bac de pesée 521 et un capteur de pesée 522 disposé sous le bac de pesée 521 et apte à peser les particules réceptionnées dans le bac de pesée 521. Ceci permet une mesure de quantité de particules précise.

Le bac de pesée 521 est dans l'exemple illustré de forme parallélépipédique. Il comprend une ouverture supérieure 523 apte à collecter des particules en provenance du réceptacle de collecte 510 via les moyens de transfert 53 des particules. Les particules tombent par gravité dans le bac de pesée 121. L'ouverture supérieure 123 s'étend sensiblement en-dessous de l'ouverture de sortie des moyens de transfert 53, l'écart entre ces deux ouvertures étant réduit de sorte à ce que le module de mesure soit compact en hauteur. L'ouverture supérieure 123 du bac de pesée 121 est plus importante que l'ouverture de sortie des moyens de transfert 53.

Dans l'exemple illustré, les moyens de transfert 53 comprennent un carter 531 de forme parallélépipédique dans lequel est disposée une chambre 532 cylindrique (appelée également stator) au sein de laquelle est montée une écluse 533 rotative. Cette écluse 533 rotative comprend une pluralité de pales 5331 définissant des cellules ou alvéoles 5332 de réception et de transport des particules des moyens de collecte 51 vers les moyens de mesure 52. Les pales 5331 sont réparties autour d'un rotor 5333 qui est mobile en rotation autour d'un arbre d'entrainement. Le document EP 3 766 325 décrit une telle écluse rotative.

La chambre 532 cylindrique comprend une ouverture d'admission des particules qui est apte à recevoir des particules en provenance des moyens de collecte 51 et une ouverture d'évacuation apte à délivrer les particules sortant du dispositif d'écluse 533 dans les moyens de mesure 53.

Le dispositif d'écluse 533 est disposé en amont des moyens de mesure 53 et en aval des moyens de collecte 51 directement dans le flux d'écoulement des particules en sortie des moyens de collecte 51, les graines tombant par gravité dans les alvéoles 5332 de l'écluse 533 à mesure que celles-ci tournent. Les graines transportées par les alvéoles 5332 se déversent ensuite par gravité dans le bac de pesée 521 à mesure que les alvéoles 5332 de l'écluse 533 tournent. Autrement dit, les alvéoles 5332 permettent une à une de réceptionner les particules provenant des moyens de collecte 51 puis de les déverser de façon contrôlée et cadencée dans les moyens de mesure 52 sous l'action de la gravité.

Une telle disposition permet de recevoir dans l'écluse des particules ayant des vitesses, trajectoires et énergies différentes (selon donc un écoulement turbulent), et de les délivrer de façon contrôlée et cadencée dans les moyens de mesure 52. Les particules tombent ainsi verticalement dans les moyens de mesure 52 avec une vitesse moindre et une énergie réduite, dans une même direction.

L'écluse 533 rotative permet éventuellement de neutraliser le flux d'air en sortie des éléments semeurs pour permettre une pesée plus précise. Autrement dit, l'écluse rotative 533 permet de dissocier l'air du flux de particules pour permettre une mesure de quantité (une pesée par exemple) plus précise sans perturbation induit par le flux d'air.

Le capteur de pesée 522 délivre un signal de mesure du poids qui est traité soit localement par une unité de traitement comprise dans le module de mesure ou à distance, par exemple dans un banc de test (l'unité de traitement peut être configurée pour obtenir un signal de débit massique par une dérivée dans le temps d'une mesure de poids issue du module de mesure).

Dans l'exemple illustré, le module de mesure 5 comprend des moyens de basculement 524 (un vérin dans cet exemple) du bac de pesée 521 des particules d'une position de collecte vers une position de vidange du bac de pesée 521. Grâce au moyen de basculement de type vérin, le bac de pesée 121 peut être vidé à distance, sans intervention d'un opérateur et selon une procédure pouvant être automatique.

Il est possible de placer plusieurs modules de mesure 1 côte à côte et les associer chacun à un ou plusieurs éléments semeurs d'un semoir, et de synchroniser les mesures du poids de plusieurs modules de mesure pour mesurer la répartition transversale en lignes ou rangs du semoir sur la largeur de travail et établir un diagnostic de la performance d'un semoir en sortie d'usine ou sur le terrain après plusieurs heures d'utilisation. La mesure des quantités issus des capteurs de mesure de chaque module peut être transmise vers un dispositif de traitement distinct des modules qui peut déterminer une quantité (poids par exemple) de graines sur chacun des rangs du semoir et comparer une quantité mesurée avec une quantité théorique de graines à semer pour un ou plusieurs rangs donnés du semoir.

Ceci permet de déterminer la performance de répartition du semoir sur chacun des rangs (on parle de répartition longitudinale) et entre les rangs eux-mêmes (on parle de répartition transversale).

Ceci permet en outre de contrôler le bon fonctionnement de chaque élément semeur du semoir et de détecter une éventuelle anomalie ou dysfonctionnement sur un ou plusieurs éléments semeurs du semoir. Cette anomalie peut être liée au fait que l'élément semeur est partiellement ou totalement obturé ce qui nécessite l'intervention d'un opérateur.

Le module de mesure est adapté pour mesurer des quantités de graines de taille et de forme différentes, par exemple des grosses graines allongées telle que l'orge, l'avoine ou le blé, des petites graines allongées telle que le lin ou encore des petites graines rondes comme le colza.

Bien que l'on ait décrit le banc de test et le module de mesure pour un semoir, il est clair que la même approche peut s'appliquer à d'autres machines agricoles.

Le banc de test est adapté en particulier mais non exclusivement pour mesurer la performance de semoirs pneumatiques et mécaniques, comprenant une ou plusieurs trémies pouvant contenir des particules identiques ou différentes (graines, engrais, ou autres).

Il est également adapté pour mesurer la performance des épandeurs d'engrais pneumatiques qui de façon connue comprennent une rampe équipée de plusieurs organes de sortie prenant la forme de conduits ou tuyaux de sortie répartis le long de cette rampe.

Il n'est toutefois pas adapté pour mesurer la performance des épandeurs centrifuges.

Selon une variante non illustrée, le module de mesure d'un flux de particules mis en œuvre dans un banc de test conforme à l'invention ne comprend pas de moyens de transfert 53 entre les moyens de collecte 51 et les moyens de mesure 52. Dans ce cas de figure, le module de mesure 5 comprend successivement des moyens de collecte 51 de particules en provenance d'un élément semeur ES d'un semoir qui est en position de semis et des moyens de mesure 52 d'une quantité de particules en provenance des moyens de collecte 51, l'ensemble étant monté sur un châssis 54. Il est à noter que ce module de mesure non illustré peut comporter une ou plusieurs des caractéristiques des moyens de collecte 51 et des moyens de mesure 52 du module de mesure de la figure 8.

On rappelle plus généralement que l'invention ne se limite pas aux exemples décrits et représentés.

## Revendications

1. Banc de test ou d'essais (1) d'une machine agricole (2) de distribution de particules apte à mettre en œuvre une pluralité de modules (5) de mesure d'un flux de particules délivrées par au moins un organe de sortie (21) de la machine agricole (2), ledit banc de test (1) comprenant des premiers moyens de réglage de l'assiette de la machine agricole (2) à tester ainsi que des modules de mesure (5), et des seconds moyens de réglage de la position relative des modules de mesure (5) par rapport à la machine agricole (2) à tester.

2. Banc de test (1) selon la revendication 1, lesdits premiers moyens de réglage étant aptes à commander le dévers et/ou la pente de la machine agricole (2) ainsi que des modules de mesure (5).

3. Banc de test (1) selon la revendication 1 ou 2, lesdits seconds moyens de réglage étant aptes à déplacer les modules de mesure (5) par rapport à la machine agricole (2) suivant au moins l'axe d'avancement de la machine agricole (2) en fonctionnement normal et l'axe transversal audit axe d'avancement.

4. Banc de test (1) selon l'une des revendications 1 à 3, comprenant des moyens de contrôle des premiers moyens de réglage et des seconds moyens de réglage, lesdits moyens de contrôle étant aptes à commander le déplacement dynamique de la machine agricole (2) et des modules de mesure (5) entre plusieurs positions de test.

5. Banc de test (1) selon l'une des revendications précédentes, comprenant un châssis principal, dit premier châssis, (10) portant un deuxième châssis (11) de support des modules de mesure (5) et de la machine agricole (2), ledit deuxième châssis (11) étant inclinable autour de l'axe d'avancement de la machine agricole (2) de sorte à régler le dévers de la machine agricole (2) ainsi que des modules de mesure (5).

6. Banc de test (1) selon la revendication 5, le deuxième châssis de support portant un dispositif d'appui de la machine agricole (2) et une structure porteuse (13) des modules de mesure (5), ledit deuxième châssis (11) comprenant des moyens de pivotement de la structure porteuse (13) autour de l'axe transversal à l'axe d'avancement de la machine agricole (2) de sorte à positionner les modules de mesure (5) à plat ou avec une inclinaison vers l'avant ou vers l'arrière.

7. Banc de test (1) selon la revendication 5 ou 6, comprenant des moyens d'élévation du deuxième châssis (11).

8. Banc de test (1) selon la revendication 6 ou 7, les modules de mesure (5) étant répartis en une ou plusieurs rangées parallèles entre elles sur la structure porteuse (13) et s'étendant dans la direction transversale à l'axe d'avancement de la machine agricole (2).

9. Banc de test (1) selon la revendication 8, la structure porteuse comprenant des premiers moyens de réglage de l'espacement entre deux rangées consécutives de modules de mesure (5).

10. Banc de test (1) selon la revendication 8 ou 9, la structure porteuse (13) comprenant des seconds moyens de réglage de l'espacement entre les modules de mesure (5) d'une même rangée.

11. Banc de test (1) selon l'une des revendications 6 à 10, le dispositif d'appui de la machine agricole (2) comprenant au moins un plateau d'appui et le banc comprenant des moyens de réglage en hauteur dudit au moins un plateau d'appui par rapport au deuxième châssis (11) pour positionner la machine agricole (2) à plat ou bien avec une inclinaison vers l'avant ou vers l'arrière.

12. Banc de test (1) selon la revendication 11, le dispositif d'appui comprenant deux plateaux d'appui de la machine agricole (2) apte à être reliées entre eux par une ou plusieurs barres d'appui amovibles de sorte à former une plateforme sur laquelle est apte à reposer en partie la machine agricole (2).

13. Banc de test (1) selon l'une des revendications 6 à 12, comprenant un tablier réglable de support et de positionnement d'une machine agricole (2) du type portée au-dessus des modules de mesure (5), ledit tablier étant destiné à être porté par le dispositif d'appui.

14. Banc de test (1) selon l'une des revendications 1 à 13, comprenant des moyens de récupération et évacuation des particules provenant d'au moins un module de mesure (5) lorsque ledit module de mesure (5) est basculé d'une position de mesure vers une position de vidange de ce dernier.
